# EUROPÄISCHE PATENTSCHRIFT

(11) **EP 1 539 545 B1**
(45) Veröffentlichungstag und Bekanntmachung des Hinweises auf die Patenterteilung: **01.03.2006**
(21) Anmeldenummer: 03798140.4
(22) Anmeldetag: 29.08.2003
(51) Int. Cl.: B60R 25/04

(54) **FAHRBERECHTIGUNGSSYSTEM**
DRIVER AUTHORISATION SYSTEM
SYSTEME D'AUTORISATION DE CONDUITE

(30) Priorität: 18.09.2002 DE 10243318
(43) Veröffentlichungstag der Anmeldung: 15.06.2005
(73) Patentinhaber: DaimlerChrysler AG, 70567 Stuttgart (DE)
(72) Erfinder: DORNBACH, Hannelore, 73773 Aichwald (DE); FITZ, Hartmut, 73660 Urbach (DE); GEBER, Michael, 72574 Bad Urach (DE); OHLE, Jörn-Marten, 71229 Leonberg (DE)
(86) Internationale Anmeldenummer: PCT/EP2003/009606
(87) Internationale Veröffentlichungsnummer: WO 2004/028871

(56) Entgegenhaltungen:
- EP-A- 0 905 337
- DE-A- 19 860 350

## Beschreibung

Die Erfindung betrifft ein Fahrberechtigungssystem und einen Taster für Verkehrsmittel zum Aktivieren von Zündschloss-Funktionen eines Verkehrsmittels.

Schlüssellose Fahrberechtigungssysteme, sogenannte Keyless-Go-Systeme, sind heute bei Verkehrsmitteln in Serieneinsatz. Mittels eines Keyless-Go-Systems ist ein Benutzer eines Fahrzeugs in der Lage das Fahrzeug zu öffnen und zu starten ohne im Besitz eines Fahrzeug-Zündschlüssels zu sein. Der Fahrer muss aber eine mobile Freigabe-Einrichtung bspw. in Form einer Scheckkarte als Teil des Keyless-Go-Systems bei sich führen. Über das Keyless-Go-System wird die Zugangsberechtigung zum Fahrzeug und die Motorstartberechtigung für das Verkehrsmittel gesteuert.

Keyless-Go-Systeme weisen eine kraftfahrzeugseitig angeordnete Sende-Empfangs-Einrichtung zur Kommunikation mit einem mobilen, von einem Benutzer mitgeführten Freigabeeinrichtung auf. Ausgehend von einem von der Sende-Empfangs-Einrichtung gesendeten Fragesignal wird eine Berechtigungsabfrage durchgeführt, bevor ein Öffnen des Fahrzeugs oder ein Motorstart ermöglicht wird. Wird systemseitig erkannt, dass sich eine nutzungsberechtigte Freigabeeinrichtung in der Nähe des Kraftfahrzeuges befindet, wird das Fahrzeug entriegelt und der Motorstart freigegeben.

Bei herkömmlichen Fahrtberechtigungssystemen mit mechanischem Zündschlüssel wird die Zugangsberechtigung über eine in den Fahrzeug-Zündschlüssel integrierte mobile Freigabeeinrichtung geprüft. Die Prüfung der Fahrberechtigung erfolgt dagegen über den in das Zündschloss gesteckten Zündschlüssel.

Aus der DE 197 47 732 A1 ist ein Fahrberechtigungssystem bekannt, wobei eine fahrzeugfeste elektronisch kodierbare Erkennungseinrichtung vorgesehen ist, die mittels einer externen, beispielsweise den mechanischen Fahrzeugschlüssel ersetzenden, elektronischen Freigabeeinrichtung, einem sogenannten Transponder, freigebbar ist. Der Transponder besitzt ein Speicherelement, in dem die notwendige Kodierung zur Freigabe der Erkennungseinrichtung abgelegt ist. Damit die Freigabeeinrichtung mit der Erkennungseinrichtung kommunizieren kann, ist diese in Nähe der Erkennungseinrichtung zu positionieren, so dass ein von der Erkennungseinrichtung abgestrahltes Signal von der Freigabeeinrichtung erfasst und verarbeitet werden kann. Das Signal der Erkennungseinrichtung wird in der Freigabeeinrichtung geprüft und mit einem entsprechenden Antwortsignal erwidert, dessen Signalverlauf der elektronischen Kodierung der Erkennungseinrichtung entsprechen muss. Passen Sendesignal und Antwortsignal des Fahrberechtigungssystems zusammen, erfolgt eine Freigabe wenigstens einer fahrzeugspezifischen Einrichtung des Fahrzeuges, beispielsweise eines elektronischen Steuergerätes zur Ansteuerung einer Brennkraftmaschine des Fahrzeuges.

Zusätzlich bekannt ist, die Freigabeeinrichtung in einen Zündschlüssel zu integrieren. Hierbei ist nachteilig, dass neben der elektronischen Kommunikation zwischen der Erkennungseinrichtung und der Freigabeeinrichtung sowohl der Zündschlüssel als auch das Zündschloss entsprechend aufeinander abgestimmte Formmerkmale aufweisen müssen. Aufgrund der Vielzahl unterschiedlicher Schließsystem bei Zündschlüsseln ist hierdurch bei der Integration eines elektronischen Fahrberechtigungssystem ein erheblicher Aufwand gegeben.

Zur Lösung dieses Problems offenbart die DE 197 47 732 A1 eine Erkennungseinrichtung, welche eine Aufnahmevorrichtung umfasst, in die eine Freigabeeinrichtung einbringbar ist und welche eine von der Freigabeeinrichtung auslösbare Betätigungsvorrichtung aufweist. Die Verwendung eines zusätzlichen Zündschlüssels ist nicht mehr notwendig.

Aus der DE 198 53 075 A1 ist zusätzlich noch bekannt, dass die Freigabeeinrichtung in zwei Positionen bringbar ist, wobei die eine Position dem Erkennen der Freigabeeinrichtung und die weitere Position zum Auslösen einer Zündschlossfunktion dient. Aus der EP 0 905 337 A ist ein Fahrberechtigungssystem bzw. ein Taster bekannt, das bzw. der den Oberbegriff des Anspruchs 1 bzw. 2 entspricht.

Aus der DE 198 60 350 A1 ist eine Motorstartberechtigungskontrolleinheit bekannt, welche nach erfolgreichem Freigabedialog zwischen einer fahrzeugfesten Erkennungseinrichtung und mobilen Identifikationsgebers eine Betätigungseinrichtung freischaltet. Diese Betätigungseinrichtung ist unter Einbauraumminimierung realisiert, indem ein manuell betätigbares Stellelement mit einem Sicherungsmodul vorgesehen ist, wobei das Sicherungsmodul über die Erkennungseinrichtung das Stellelement entsprechend freigibt. Mittels des freigegebenen Stellelements kann das Lenkrad mechanisch entriegelt und der Motorstart ausgelöst werden. Das Stellelement kann als Drehschalter ausgeführt sein dem ein Drucktaster zugeordnet ist, wobei der Drucktaster zum Starten des Freigabedialogs dient. Zum Starten des gesamten Vorganges einschließlich des Durchführens der gewünschten Berechtigungsabfrage ist beispielsweise in den Schaltknüppel oder Gangwahlhebel oberseitig ein elektrischer Drucktaster integriert.

Die bekannten schlüssellosen Motorstartberechtigungskontrollsysteme sind zumeist in schlüssellose Zugangsberechtigungskontrollsysteme eingebunden, da zum Durchführen der gewünschten Frage-Antwort-Dialoge dieselben Hardware-Komponenten eingesetzt werden können.

Auch wenn mit einer solchen, vorbeschriebenen Fahrberechtigungseinheit der Bedienkomfort gegenüber herkömmlichen Schlüsselsystemen erhöht ist, muss eine zusätzliche Betätigungsvorrichtung im Cockpit-Bereich des Fahrers zum Starten des Startvorgangs zur Verfügung gestellt werden. Diese Betätigungsvorrichtung behindert das Fahrzeug-Design des Cockpits, da ein zusätzlicher Platz hierfür bereit gestellt werden muss. Außerdem fallen zusätzlichen Kosten für Schalter und dessen Verkabelung an.

Fahrzeuge mit Keyless-Go-Systemen benötigen zusätzlich eine Notlaufbedienung mittels des konventionellen Motorstartberechtigungssystem bestehend aus Zündschloss und -schlüssel. Grund hierfür ist die hohe Anfälligkeit der Keyless-Go-Systeme auf Funkstörer wie beispielsweise Garagentüröffner, Funkkopfhörer usw. Diese Funkstörer sind von der Post für Frequenzbereiche freigegeben, die ebenfalls von Keyless-Go-Systemen benutzt werden.

Damit steht man vor dem Problem Fahrzeuge mit Keyless-Go-Systemen immer mit dem standardmäßig, auch für nicht Keyless-Go-Systeme vorgesehenen elektronischen Zündschloss und Zündschlüssel auszustatten. Zusätzlich erfolgt für Fahrzeuge mit Keyless-Go-Systemen die Ausstattung mit einem zusätzlichen Taster, welcher mit dem elektronischen Zündschloss verbunden ist. Dies erhöht die Produktionskosten, da das Fahrberechtigungssystem nicht einheitlich für Fahrzeuge mit/ohne Keyless-Go-System produziert werden kann.

Es ist nun die Aufgabe der vorliegenden Erfindung ein Keyless-GO-Fahrberechtigungssystem derart weiterzubilden, dass verschiedene Zündschlossfunktionen zuverlässig und in einfacher Weise aktivierbar sind, ohne ein speziell dafür vorgesehenes Bedienelement in einem Fahrzeug einzubauen.

Diese Aufgabe wird erfindungsgemäß durch die Merkmale des Anspruchs 1 gelöst. Danach sind die Zündschloss-Funktionen mittels der Steuergeräteeinheit über einen an das Zündschloss anbringbaren, betätigbaren und abnehmbaren Taster aktivierbar, ohne dass eine Zündschlossbetätigung in Form eines Drehens eines in ein Dreh-Zündschloss eingeführten Schlüssels erforderlich ist.

Das erfindungsgemäße Fahrberechtigungssystem hat den Vorteil, dass die Produktion des Fahrberechtigungssystems nun für Kraftfahrzeuge mit/ohne Keyless-Go -System in derselben Weise erfolgen kann. Die elektronische Zündschloss-Steuereinheit, also elektronisches Zündschloss mit der dazugehörigen Steuereinheit, kann für Systeme mit/ohne Keyless-Go identisch produziert werden. Es ist für Kraftfahrzeuge mit Keyless-Go-System keine zusätzliche Verkabelung zu einem Taster notwendig. Das elektronische Zündschloss muss nicht an das Keyless-Go-System angepasst werden.

Ein weiterer Vorteil ist, dass sich der Fahrer zum Starten des Kraftfahrzeugs im Keyless-Go-Modus nicht eine neue Position für den Starttaster merken muss. Vielmehr kann das Kraftfahrzeug von derselben Position gestartet werden, unabhängig ob das Kraftfahrzeug mit Zündschlüssel oder im Keyless-Go-Modus betrieben wird.

Vorteilhaft ist zudem, dass der Keyless-Go-Modus einfach durch Abnehmen des Tasters mit dem Standard-System ersetzt werden kann. Dies ist insbesondere bei Fahrzeugen wichtig, die mit Keyless-Go-System ausgestattet sind. In diesen Fahrzeugen bleibt der Taster im Allgemeinen gesteckt. Fällt das Keyless-Go-System aus oben erläuterten Gründen aus, kann aber sofort der Taster abgezogen werden und der Fahrer kann das Fahrzeug starten.

Die Integration der mobilen Freigabeeinrichtung in den Zündschlüssel hat den Vorteil, dass der Fahrer neben der mobilen Einheit nicht auch noch den Zündschlüssel mit sich tragen muss.

Eine weitere große Kostenersparnis ist, dass beim Design des Cockpits kein zusätzlicher Raum für einen Starttaster zur Verfügung gestellt werden muss.

Durch die Konzentration auf das für die Fahrberechtigung zuständige System erfolgt eine Bauraumoptimierung. Zusätzliche Schalter, Verkabelung werden vermieden. Der Platzbedarf des Fahrberechtigungssystems im Cockpit verringert sich.

Die bedienerfreundliche Positionierung des Tasters auf der Oberseite des Gangwahlhebels oder des Schaltknüppels ist bei "Shift-by-Wire"-Fahrzeugen nicht mehr möglich. Da die Bedienelement lenkradnah ausgeführt sind, wird von einer oberseitigen Positionierung des Tasters abgesehen, um Fehlbedienungen durch den Fahrer zu vermeiden. Damit geht steht eine bedienungsfreundliche Taster-Position nicht mehr zur Verfügung.

Die Aufgabe wird zudem durch die Merkmale des Anspruchs 2 gelöst. Danach ist der Taster an ein Zündschloss eines Verkehrsmittels anbringbar, betätigbar sowie abnehmbar und das Betätigungselement wirkt beim Betätigen des Tasters mit einem Freigabeschalter im fahrzeugseitigen Zündschloss zusammen, um Zündschloss-Funktionen ohne Drehen des Drehschalters zu aktivieren.

Der erfindungsgemäße Taster hat den Vorteil, dass dieser unter geringem Kostenaufwand und unabhängig von der Zündschloss-Einheit herzustellen ist.

Die berührungslose Stromversorgung des Tasters über induktive Spannungskopplung ist wartungsfreier als eine direkte mechanische Kopplung, da bei der induktiven Kopplung geringere Abziehkräfte auftreten.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. Es sollen auch die vorteilhaften Ausgestaltungen einbezogen sein, die sich aus einer beliebigen Kombination der Unteransprüche ergeben. In der Zeichnung ist eine Ausführungsform der erfindungsgemäßen Vorrichtung dargestellt. Es zeigen jeweils in schematischer Darstellung,

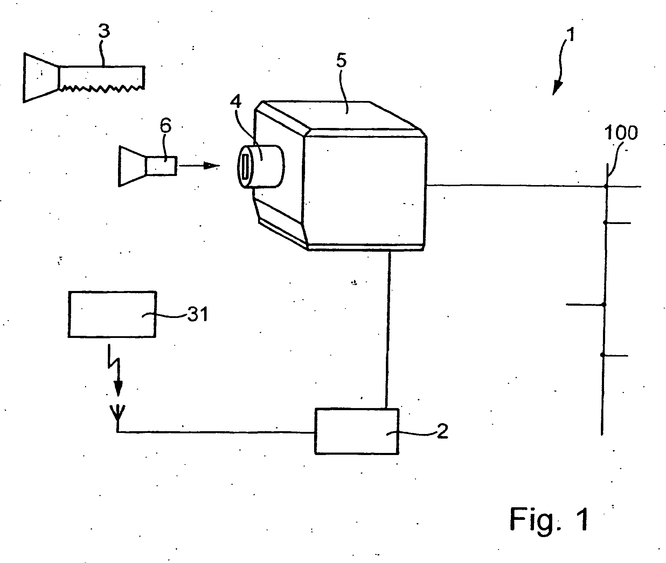

- Fig. 1: ein Blockschaltbild der Komponenten gemäß einer ersten Ausführungsform ,
- Fig. 2: ein weitere Ausführungsform und
- Fig. 3: eine Längsschnittdarstellung durch den erfindungsgemäßen Taster

Das Fahrberechtigungssystem 1 für Kraftfahrzeuge weist eine fahrzeugfeste Erkennungseinrichtung 2 zum Durchführen eines die Nutzungsberechtigung prüfenden Dialogs mit einer mobilen Freigabeeinrichtung 31 auf. Das Fahrberechtigungssystem 1 verfügt über ein elektronisches Zündschloss (EZS) 4 in das ein Zündschlüssel 3 einsteckbar ist. Die Steuergeräteeinheit 5 dient zum Aktivieren von Zündschloss-Funktionen wie beispielsweise Starten des Motors. Die Zündschloss-Funktionen können mittels der Steuergeräteeinheit 5 des EZS 4 über einen in das Zündschloss einsteckbaren, betätigbaren und abnehmbaren Taster 6 aktiviert werden. Über einen Datenbus 100 kann die Steuergeräteeinheit 5 des EZS 4 mit weiteren Steuergeräten des Fahrzeugs Daten austauschen, insbesondere die Zündschloss-Funktionen realisieren.

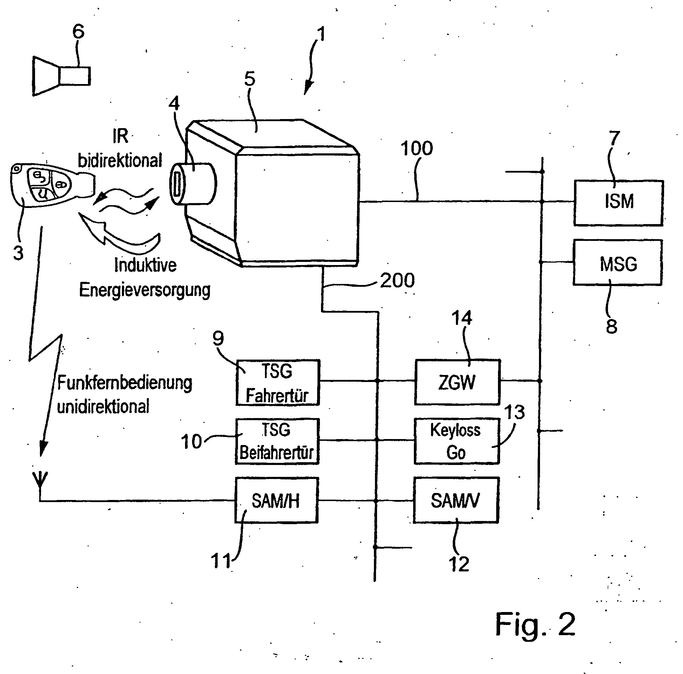

Wie in Figur 2 dargestellt, weist das Fahrberechtigungssystem 1 ein Keyless-Go-Berechtigungs-System mit einem Standard-System auf, wobei das Standard-System einem System entspricht bei dem die Zündschlossfunktionen wie beispielsweise Starten des Motors nur durch Einstecken und ggfs. Drehen des mechanischen Zündschlosses ausgelöst werden kann. Die in Figur 2 dargestellten Steuergeräteinheiten 5-14 ermöglichen die Realisierung der verschiedenen Zündschloss-Funktionen.

Die verschiedenen Steuergeräteeinheiten 5-14 sind über einen Datenbus CAN-C 100 bzw. einen Datenbus CAN-B 200 mit der Steuergeräteeinheit 5 des EZS 4 verbunden. Über ein zwischen diesen Datenbussen 100, 200 geschaltetes zentrales Gateway (ZGW) 14 können die verschiedenen Steuergeräteeinheiten 5-14 ebenfalls direkt kommunizieren.

Damit besteht das Netzwerk, welches die verschiedenen Steuergeräteeinheiten 5-14 verbindet, aus dem Datenbus CAN-C 100, CAN-B 200 und dem ZGW 6, wobei das ZGW 14 hauptsächlich als Router zwischen den beiden Datenbussen 100, 200 eingesetzt ist.

In den Zündschlüssel 30 ist eine mobile Freigabeeinrichtung 31 integriert. Die mobile Freigabeeinrichtung tauscht Daten mittels eines Transponders, einer Infrarot(IR)- und einer Hochfrequenz(HF)-Sende-/Empfangseinheit mit der Erkennungseinrichtung 2 aus.

Die Steuergeräteeinheit 5 ist für die Aktivierung der verschiedenen Zündschloss-Funktionen wie beispielsweise "Wecken des Datenbusses", "Zündung ein" und "Starten des Motors" zuständig. Zudem ist die fahrzeugfeste Erkennungseinrichtung 2 in die Steuergeräteeinheit 5 des EZS 4 integriert. Die in die Steuergeräteeinheit 5 integrierte Erkennungseinrichtung 2 erhält über den Datenbus CAN-B 200 erzeugt bei erfolgreicher Nutzungsberechtigungsverifizierung ein Freigabesignal.

Über die Datenbusse CAN-C 100 und CAN-B 200 wird die Steuergeräteeinheit 5 des EZS 4 mit Zusatz-Informationen von Sensoren über die Stellung des Bremspedals, des Kupplungspedals und/oder der Tür versorgt.

Das EZS 4 ist als Drehschloss ausgebildet. Das Drehschloss lässt sich mittels des Zündschlüssels 30 in mehrere Positionen schalten. In jeder Position werden unterschiedlichen Zündschloss-Funktionen aktiviert. Das EZS 4 verfügt über zwei Schalter, welche nacheinander beim vollständigen Einstecken des Zündschlüssels 30, 31 betätigt werden und ein elektrisches Signal erzeugen. Mittels der Reihenfolge der Signale und ausgehend von welchem Schalter das Signal kommt, erkennt die Steuergeräteeinheit 5 des EZS 4 ob der Zündschlüssel 30 halb oder ganz eingesteckt bzw. ob ein Zündschlüssel 30 oder ein Drucktaster 6 eingesteckt wurde. Der Drucktaster wird dadurch erkannt, dass er nur einen Schalter des EZS 4 auslöst. Das EZS 4 weist zusätzlich Spulen auf, die eine induktive Spannungskopplung mit dem Drucktaster 6 ermöglichen.

Der Drucktaster 6 ist in das EZS 4 einschiebbar, bedienbar und abnehmbar. Bei dessen Bedienung, also durch Drücken des Drucktasters 6, wird ein elektrisches Signal erzeugt. Zusammen mit dem Signal aus der Erkennungseinrichtung 2 und den in der Steuergeräteeinheit 5 des EZS 4 zur Verfügung stehenden Informationen über das Fahrzeug sind die Zündschloss-Funktionalitäten des Drehschlosses mit Zündschlüssel 30 über den Drucktaster 6 nachgebildet.

Der eingesteckte Drucktaster 6 wird in dem EZS 4 über die Steuergeräteeinheit 5 induktiv mit Spannung versorgt. Diese Spannung wird zur Beleuchtung des Drucktasters 6 mittels Leuchtdioden eingesetzt.

Eine Intelligente-Servermodul-Steuergeräteeinheit (ISM) 7 ist über den Datenbus CAN-C 100 an die Steuergeräteeinheit 5 des EZS 4 und die weiteren Steuereinheiten 6-14 angebunden. Das ISM 7 überwacht Zündschloss-Funktionen, die nicht über ein Motorsteuergerät (MSG) 8 abgebildet werden können. Beispielsweise sperrt das ISM 7 das Getriebe bei "P"-Stellung des Wahlhebels einer Automatik-Schaltung oder das ISM 7 hebt die Wegfahrsperre auf.

Das MSG 8 ist über den Datenbus CAN-C 100 an die Steuergeräteeinheit 5 des EZS 4 und die weiteren Steuereinheiten 6-14 angebunden. Das MSG 8 setzt die von der Steuergeräteeinheit 5 des EZS 4 abgesetzten Befehle an den Motor wie "Motor Start" und "Motor aus" um.

Die Türsteuergeräte (TSG) von Fahrer- und Beifahrer-Tür 9, 10 sind über den Datenbus CAN-B 200 an das Netzwerk angebunden. Mittels der TSG 9, 10 können die Schließmotoren der Türen angesteuert werden. Die TSG 9, 10 stellen auch einen Infrarot-Empfang zur Verfügung, der für den Fall angelegt ist, dass der Schlüssel 3 nur zur Zugangskontrolle, also Öffnen des Fahrzeugs, dient.

Das Signal-Erfassungs- und Ansteuerungsmodule für Hinten (SAM/H) 11 ist über den Datenbus CAN-B 200 an das Netzwerk angebunden. Das Steuergerät SAM/H 11 verfügt über eine Sende-/Empfangseinrichtung. Diese Sende-/Empfangseinrichtung dient der kabellosen Datenübertragung zur im Zündschlüssel 30 integrierten mobilen Freigabeeinrichtung 31. Die Datenübertragung erfolgt im HF-Bereich. Das SAM/H 11 dient damit als Gateway zwischen der mobilen Freigabeeinrichtung 31 im Zündschlüssel 30 und dem fahrzeugfesten Netzwerk. Über die Steuereinheit SAM/H 11 haben damit die weitern Steuereinheiten 5-14 Zugriff auf die Dialogdaten zwischen mobiler Freigabeeinrichtung 31 bzw. Zündschlüssel 30 und SAM/H 11.

Das Signal-Erfassungs- und Ansteuerungsmodule für Vorne (SAM/V) 12 ist über den Datenbus CAN-B 200 an das Netzwerk angebunden. Mittels des Steuereinheit SAM/V 12 sorgt die Steuergeräteeinheit 5 des EZS 4 für die Klemmenumschaltung, welche bei bestimmten Zündschloss-Funktionen notwendig ist. Insbesondere betrifft dies die Umschaltung der Klemmen "15" und "50".

Eine Steuergeräteeinheit 13 zur Umsetzung der Keyless-Go-Funktionalität ist über den Datenbus CAN-B 200 an das Netzwerk angebunden. Das Keyless-Go-Steuergeräteeinheit 13 verfügt über einen Induktivitätsquelle zum Wecken des Transponders in der mobilen Freigabeeinrichtung 31 im Zündschlüssel 30. Das Keyless-Go-System-Steuergerät stellt also fest, wo sich die mobile Freigabeeinrichtung 31 bzw. der Zündschlüssel 30 befindet und initiiert den Freigabedialog. Das Steuergerät 13 ist vorzugsweise nur dann aktiv, wenn der Drucktaster 6 in das EZS gesteckt ist, das Fahrberechtigungssystem 1 im Keyless-Go-Modus betrieben wird.

Das Fahrberechtigungssystem 1 funktioniert im Standard-System ohne Keyless-Go-Funktionalität, also ohne dass der Drucktaster 6 im EZS 4 eingesteckt ist, folgendermaßen: Das Fahrberechtigungssystem 1 prüft erst die Zugangsberechtigung mittels der TSG 9, 10. Sobald der Nutzer im Fahrzeug ist und den Zündschlüssel 30 in das EZS 4 einsteckt erfolgt die Prüfung auf Fahrberechtigung mittels IR-Kommunikationen über EZS 4.

Die Zugangsberechtigung und das Öffnen der Türen wird durch Senden eines codierten Signals mittels des IR-Senders der mobilen Freigabeeinrichtung 31 im Zündschlüssel 30 an das TSG 9 realisiert. Bei erfolgreicher Nutzererkennung des gesendeten Signals durch die Erkennungseinrichtung 2 werden die Türen über die Steuergeräteeinheit 5 mittels der TSG 9, 10 geöffnet. Der Nutzer gelangt in das Fahrzeug.

Die Fahrberechtigung wird über den Besitz des zum Fahrzeug gehörenden Zündschlüssels geprüft. Hierzu wird in der ersten Position, der Position "0" des EZS 4 die Zündschlüssel-Identität geprüft. Die Position "0" des EZS 4 entspricht der "Schlüssel steckt"-Stellung. In dieser Stellung wird das "Schlüssel Steckt"-Signal erzeugt, sofern der Zündschlüssel 30 ganz eingesteckt ist. Über IR-Kommunikation wird ein Freigabedialog zwischen der Freigabeeinrichtung 31 und der Erkennungseinrichtung 2 geführt. Bei erfolgter Berechtigung wird das Bordnetz geweckt, die Wegfahrsperre und sonstige Diebstahlsicherungssysteme werden aufgehoben.

Die weiteren Positionen des EZS 4 aktivieren weitere Zündschloss-Funktionen:
Die Position "1" entspricht der Radiostellung. In dieser Position wird die Komfortelektronik wie Radio, Fensterheber, Sitzverstellung usw. in Betrieb genommen.
Die Position "2" entspricht der "Zündung Ein"-Stellung. In dieser Position wird Spannung an Klemme 15 gegeben. Die Triebstrangelektronik wie Motorsteuergerät, Fahrwerksteuergerät usw. wird in Betrieb genommen.
Die Position "3" entspricht dem Motorstart. In dieser Position wird Spannung an Klemme 50 gegeben. Der Motor wird gestartet.

Das Fahrberechtigungssystem 1 funktioniert mit Keyless-Go-Funktionalität, also mit im EZS 4 gesteckten Drucktasters 6, folgendermaßen: Das Fahrberechtigungssystem 1 prüft die Zugangsberechtigung und die Fahrberechtigung über die Keyless-Go-Steuergeräteeinheit 13, die Erkennungseinrichtung 2 und den Drucktaster 6. Zum Starten des Motors wird kein Zündschlüssel 30 in das EZS 4 gesteckt.

Die Initiierung der Kontaktaufnahme mit der in den Zündschlüssel 30 integrierten mobilen Freigabeeinrichtung 31 durch das Steuergerät 13 erfolgt aufgrund einer Aktion des Nutzers am Fahrzeug beispielsweise Berühren der Fahrertür, Drücken des Drucktasters usw. Hierbei produziert die Keyless-Go-Steuergeräteeinheit 13 ein induktives Feld, welches ausreicht den Transponder zu wecken. Die mobile Freigabeeinrichtung 31 schaltet dann zum eigentlichen Freigabedialog auf HF-Übertragung um. Hierbei wird ein codiertes IdentifikationsSignal über den SAM/H 11 auf den CAN-B 200 weitergegeben, wo es dann von der Erkennungseinrichtung 2 abgegriffen, überprüft und ein Freigabesignal weitergegeben werden kann.

Mittels des eingesteckten Drucktasters 6 und den zusätzlichen Informationen des Steuergeräts 5 über Bremspedalstellung, Türstellung usw. können nun die mittels der Positionen "0,1,2,3" des EZS 4 definierten Zündschloss-Funktionen ebenfalls aktiviert werden.

Das Einstecken des Drucktasters 6 in das EZS 4 löst keine Reaktion aus. Beim Drücken des Drucktasters 6 fährt ein Stößelpaar aus, welches im EZS 4 nur das "Schlüssel Steckt"-Signal, ohne einen weiteren Schalter im EZS 4 zu betätigen, erzeugt. Damit erkennt die Steuergeräteeinheit 5 des EZS 4, dass kein Zündschlüssel 30 sondern der Drucktaster 6 im EZS 4 gesteckt ist. Dementsprechend wird der Freigabedialog über das Keyless-Go-Steuergerät 13 gestartet. Damit sucht das Steuergerät 13 wie oben ausgeführt die mobile Freigabeeinrichtung 31. Bei erfolgter Berechtigungsüberprüfung durch die Erkennungseinrichtung 2 erfolgt ein Freigabesignal, welches dann von der Steuergeräteeinheit 5 des EZS 4 zur Aktivierung der Zündschloss-Funktionen geprüft wird.

Die Zündschloss-Funktion der Position "3", des EZS 4, der Motorstart, wird durch Drücken des Drucktasters 6 und dem gleichzeitigen Betätigen der Bremse aktiviert.

Die Zündschloss-Funktion der Position "1" des EZS 4, die Radiostellung, wird durch ein erstes Mal Drücken des Drucktasters 6 und dem gleichzeitigen Nichtbetätigen der Bremse aktiviert.

Die Zündschloss-Funktion der Position "2" des EZS 4, die "Zündung Ein"-Stellung, wird durch ein zweites Mal Drücken des Drucktasters 6 und dem gleichzeitigen Nichtbetätigen der Bremse aktiviert.

Die Zündschloss-Funktion der Position "0" des EZS 4, die "Schlüssel Steckt"-Stellung, wird durch ein drittes Mal Drücken des Drucktasters 6, dem gleichzeitigen Nichtbetätigen der Bremse und dass zum gleichen Zeitpunkt alle Türen geschlossen sind aktiviert.

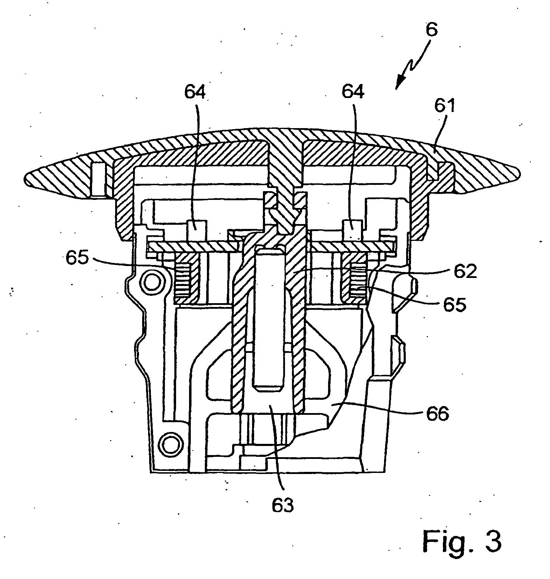

In Figur 3 ist ein Drucktaster 6 abgebildet. Der Drucktaster 6 weist eine Kappe 61 auf über die ein Betätiger 62 gedrückt wird. Der Betätiger 62 ist über eine Rückstellfeder 63 elastisch gelagert, so dass der Betätiger 62 nach Betätigung wieder in seine Ausgangslage zurückkehrt. Die Rückstellfeder 63 ist als Druckfeder ausgeführt. Beim Drücken des Betätigers wird dieser bis zu einer Stellung, welche durch einen Sperrschieber vorgegeben ist, bewegt. Der Betätiger 62 ist mechanisch mit einem Stößelpaar 66 verbunden. Das Stößelpaar ist als Ausrückstößel ausgebildet, welches beim Betätigen parallel zu einer Symmetrieachse des Drucktasters ausrückbar ist. Durch Drücken des Betätigers 62 wird damit ebenfalls das Stößelpaar bewegt, welches das "Schlüssel-Steckt"-Signal durch Betätigen des Schalters im EZS 4 auslöst. Die Konstruktion des Drucktasters 6, also Kappe 61, Betätiger 62, Stößel, Druckfeder, ist in eine linke und rechte Hülse eingefasst.

Der Drucktaster 6 weist zusätzlich zwei Light-Emmiting-Dioden (LED) 64 auf einer Leiterplatte auf. Die Leiterplatte ist auf der Oberseite des Betätigers angebracht. Unter der Leiterplatte ist jeweils eine Spule 65 zur induktiven Spannungskopplung mit dem EZS 4 angebracht. Mittels der induktiven Spannungskopplung werden die LED's mit Spannung versorgt. Die LEDs beleuchten die Kappe 61 des Drucktasters 6.

Das EZS 4 weist ebenfalls zwei Spuleneinheiten 65 auf, welche so angeordnet sind, dass sich die Spulen des eingesteckten Drucktasters 6 mit den Spulen des EZS 4 weitgehend überlappen. Damit ist eine optimale Energieübertragung zwischen EZS 4 und Drucktaster 6 gewährleistet. Die Spulen im EZS 4 werden erst dann über die Steuergeräteeinheit 5 mit Wechselfrequenz versorgt, wenn auf dem CAN-B 200 von einem Helligkeitssensor ein Signal für die Auffind- bzw. Suchbeleuchtung der Anzeigen und Knöpfe im Fahrzeug vorliegt.

Der Drucktaster 6 kann auch als elektronischer Taster ausgeführt sein. Hierbei wird durch Berührung des Tasters über einen Sensor ein elektronisches Signal ausgelöst, welches über das Zündschloss 4 an die Steuergeräteeinheit 5 weitergegeben wird.

Der Drucktaster 6 ist in das Zünschloss 4 einsteckbar, betätigbar und abnehmbar ausgeführt. Der Drucktaster 6 kann aber auch beispielsweise an einer auf das Zündschloss 4 angebrachten Halterung angebracht werden. Hierzu könnte die Halterung ein Bajonettverschluss oder einen Drehverschluss aufnehmen.

Der Drucktaster 6 kann auch mit einer drahtlosen Kommunikationseinheit ausgerüstet sein, welche beim Betätigen des Tasters Verbindung zur Freigabeeinrichtung und/oder Steuergeräteeinheit aufnimmt, wodurch die oben beschriebenen Zündschloss-Funktionen aktiviert werden.

Als Datenbus sind CAN-Datenbusse eingesetzt. Es könnte aber auch ein anderes Datenbussystem wie beispielsweise MOST, Flex-Ray sein. Es könnten aber auch ein sogenanntes drahtloses Netzwerk sein. Wichtig ist nur, dass die Steuergeräteeinheit 5 des EZS, die mobile Freigabeeinrichtung 31 und das EZS4 untereinander und zur Realisierung der Zündschlossfunktionen mit den entsprechenden Steuergeräten des Fahrzeugs Daten austauschen können.

Die Mobile Freigabeeinrichtung 31 kann als Scheckkarte, Schlüssel oder ähnliche mobile Einheit ausgeführt sein. Die Ausführung im Zündschlüssel 30 bietet sich an, da der Fahrer dann immer beide Möglichkeiten zur Bedienung hat. Die Art der Datenübermittlung für die mobile Freigabeeinrichtung 31 ist nicht auf IR, HF, Transponder eingeschränkt. Vielmehr steht die drahtlose Datenübertragung im Vordergrund.

Die Aufteilung der verschiedenen Funktionen auf die Steuergeräteeinheiten 5-14 ist nicht zwingend. Beispielsweise kann die Erkennungseinrichtung 2 auch in einer getrennten Steuergeräteeinheit realisiert sein. Die Steuergeräteeinheit 13 könnte in das Steuergerät 5 des EZS 4 integriert sein, usw.

## Patentansprüche

1. Fahrberechtigungssystem (1) für Verkehrsmittel, mit
- fahrzeugfester Erkennungseinrichtung (2) zum Durchführen einer die Nutzungsberechtigung prüfender Kommunikation mit einer mobilen Freigabeeinrichtung (31) sowie
- einem als Drehschalter ausgebildeten Dreh-Zündschloss (4) für einen Zündschlüssel (3) und
- einer Steuergeräteeinheit (5) zum Aktivieren von Zündschloss-Funktionen, wie Anlassen und Abschalten des Motors, wenn der Zündschlüssel im Dreh-Zündschloss in eine entsprechende Stellung gebracht wird, wobei
die Zündschloss-Funktionen mittels der Steuergeräteeinheit (5) über einen alternativ zum Zündschlüssel an das Zündschloss (4) anbringbaren, betätigbaren und abnehmbaren Taster (6) aktivierbar sind, **dadurch gekennzeichnet, dass** Mittel vorhanden sind, welche das Aktivieren der Zündschloss-Funktionen ohne Drehen des Drehschalters erlauben.

2. Taster mit einem Betätigungselement zum Aktivieren von Zündschloss-Funktionen eines Verkehrsmittels, insbesondere Anlassen und Abschalten des Verkehrsmittelmotors, wobei
- der Taster (6) an ein als Drehschalter ausgebildetes Zündschloss (4) eines Verkehrsmittels anbringbar, betätigbar sowie abnehmbar ist, und
- das Betätigungselement(62) beim Betätigen des Tasters (6) mit einem Freigabeschalter im fahrzeugseitigen Zündschloss (4) zusammenwirkt, um Zündschloss-Funktionen zu aktivieren, **dadurch gekennzeichnet, dass** das Aktivieren der Zündschloss-Funktionen ohne Drehen des Drehschalters erfolgt.

3. Fahrberechtigungssystem nach Anspruch 1,
**dadurch gekennzeichnet,**
**dass** der eingesteckte Taster (6) bei Betätigung ein Signal erzeugt, welches die nutzungsberechtigende Kommunikation startet.

4. Fahrberechtigungssystem nach Anspruch 1,
**dadurch gekennzeichnet,**
**dass** bei einer Betätigung des Tasters (6) die Aktivierung der Zündschloss-Funktionen mittels der Steuergeräteeinheit (5) aufgrund von Zusatzinformationen des Verkehrsmittels erfolgt, wobei die Zusatzinformationen des Verkehrsmittels die Stellung des Bremspedals und/oder des Kupplungspedals und/oder der Tür umfassen.

5. Taster nach Anspruch 2,
**dadurch gekennzeichnet,**
**dass** das Betätigungselement (62) als Ausrückstößel (66) ausgebildet ist, welches beim Betätigen parallel zu einer Symmetrieachse des Tasters (6) ausrückbar ist, um den Freigabeschalter im fahrzeugseitigen Dreh-Zündschloss (4) zu betätigen.

6. Taster nach Anspruch 5,
**dadurch gekennzeichnet,**
**dass** die Endposition des Ausrückstößels (66) durch seitlich zur Achse des Ausrückstößels (66) angeordnete Sperrschieber begrenzt wird.

7. Taster nach Anspruch 1 oder 2,
**dadurch gekennzeichnet,**
**dass** der Taster (6) eine Auffindbeleuchtung aufweist, wobei die Stromversorgung der Auffindbeleuchtung berührungslos erfolgt.

8. Taster nach Anspruch 7,
**dadurch gekennzeichnet,**
**dass** die Stromversorgung des Tasters (6) über eine induktive Spannungskopplung mit dem Dreh-Zündschloss (4) erfolgt.

9. Taster nach Anspruch 2 oder 3,
**dadurch gekennzeichnet,**
**dass** das Betätigungselement eine drahtlose Kommunikationseinheit aufweist, welche beim Betätigen des Tasters ein Signal an das Dreh-Zündschloss (4) sendet, wodurch Zündschloss-Funktionen aktiviert werden.

## Claims

1. Driver authorization system (1) for a vehicle, comprising
- an on-board identification device (2) for communicating with a mobile enabling device (31) to verify the usage authorization, and
- a rotating ignition lock (4) in the form of a rotary switch, for an ignition key (3), and
- a control unit (5) for activating ignition lock functions such as starting and switching off the engine when the ignition key is moved to a corresponding position in the rotating ignition lock,
in which case the ignition lock functions can be activated by means of the control unit (5) using a pushbutton (6), as an alternative to the ignition key, that can be mounted and actuated on and removed from the ignition lock (4), **characterized in that** means are provided which allow the ignition lock functions to be activated without rotating the rotary switch.

2. Pushbutton with an actuating element for activating ignition lock functions of a vehicle, particularly starting and switching off the engine of the vehicle, in which case
- the pushbutton (6) can be mounted and actuated on and removed from an ignition lock (4), in the form of a rotary switch, of a vehicle, and
- the actuating element (62), when the pushbutton (6) is operated, interacts with a enabling switch in the on-board ignition lock (4) in order to activate ignition lock functions, **characterized in that** the ignition lock functions are activated without rotating the rotary switch.

3. Driver authorization system according to Claim 1, **characterized in that** the depressed pushbutton (6), when operated, generates a signal which starts the communication authorizing usage.

4. Driver authorization system according to Claim 1, **characterized in that**, when the pushbutton (6) is operated, the ignition lock functions are activated by means of the control unit (5) on the basis of additional information about the vehicle, the additional information about the vehicle comprising the position of the brake pedal and/or of the clutch pedal and/or of the door.

5. Pushbutton according to Claim 2, **characterized in that** the actuating element (62) is in the form of a release plunger (66) which, when operated, can be released parallel to the axis of symmetry of the pushbutton (6) in order to operate the enabling switch in the on-board rotary ignition lock (4).

6. Pushbutton according to Claim 5, **characterized in that** the limit position of the release plunger (66) is limited by locking slides arranged to the side of the axis of the enabling plunger (66).

7. Pushbutton according to Claim 1 or 2, **characterized in that** the pushbutton (6) has locating illumination, the locating illumination being supplied with power without any contact being made.

8. Pushbutton according to Claim 7, **characterized in that** the pushbutton (6) is supplied with power via an inductive voltage coupling to the rotating ignition lock (4).

9. Pushbutton according to Claim 2 or 3, **characterized in that** the actuating element has a wire-free communication unit which, when the pushbutton is operated, sends a signal to the rotating ignition lock (4), as a result of which ignition lock functions are activated.

## Revendications

1. Système d'autorisation de conduite (1) pour des moyens de transport, comprenant
- un dispositif de reconnaissance (2) solidaire du véhicule pour la réalisation d'une communication contrôlant l'autorisation d'utilisation avec un système de validation (31) mobile et
- une serrure de contact rotative (4) conçue comme interrupteur rotatif pour une clef de contact (3) et
- une unité d'appareil de commande (5) pour l'activation de fonctions de serrure de contact, comme le démarrage et l'arrêt du moteur, lorsque la clef de contact est amenée dans une position appropriée dans la serrure de contact rotative, les fonctions de la serrure de contact pouvant être activées au moyen de l'unité d'appareil de commande (5) par un bouton-poussoir (6) pouvant être placé sur la serrure de contact (4) comme alternative à la clef de contact, pouvant être actionnée et pouvant être enlevée, **caractérisé en ce que** des moyens sont présents, qui permettent l'activation des fonctions de la serrure de contact sans rotation de l'interrupteur rotatif.

2. Bouton-poussoir avec un élément d'actionnement pour l'activation de fonctions de serrure de contact d'un moyen de transport, en particulier le démarrage et l'arrêt du moteur du moyen de transport,
- le bouton-poussoir (6) pouvant être placé sur une serrure de contact (4), conçue comme interrupteur rotatif, d'un moyen de transport, pouvant être actionné et pouvant être enlevé, et
- l'élément d'actionnement (62) coopérant lors de l'actionnement du bouton-poussoir (6) avec un interrupteur de validation dans la serrure de contact (4) côté véhicule, afin d'activer des fonctions de la serrure de contact, **caractérisé en ce que** l'activation des fonctions de la serrure de contact s'effectue sans rotation de l'interrupteur rotatif.

3. Système d'autorisation de conduite selon la revendication 1, **caractérisé en ce que**, le bouton-poussoir (6) enfoncé génère en cas d'actionnement un signal qui démarre la communication autorisant l'utilisation.

4. Système d'autorisation de conduite selon la revendication 1, **caractérisé en ce que**, lors d'un actionnement du bouton-poussoir (6), l'activation des fonctions de la serrure de contact s'effectue au moyen de l'unité d'appareil de commande (5) sur la base d'informations supplémentaires du moyen de transport, les informations supplémentaires du moyen de transport comprenant la position de la pédale de frein et/ou de la pédale d'embrayage et/ou de la porte.

5. Bouton-poussoir selon la revendication 2, **caractérisé en ce que**, l'élément d'actionnement (62) est conçu comme un coulisseau de débrayage (66), qui peut être désaccouplé lors de l'actionnement parallèlement à un axe de symétrie du bouton-poussoir (6), afin d'actionner l'interrupteur de validation dans la serrure de contact rotative (4) côté véhicule.

6. Bouton-poussoir selon la revendication 5, **caractérisé en ce que**, la position finale du coulisseau de débrayage (66) est délimitée par un coulisseau d'arrêt disposé sur le côté de l'axe du coulisseau de débrayage (66).

7. Bouton-poussoir selon la revendication 1 ou 2, **caractérisé en ce que**, le bouton-poussoir (6) présente un éclairage de détection, l'alimentation électrique de l'éclairage de détection s'effectuant sans contact.

8. Bouton-poussoir selon la revendication 7, **caractérisé en ce que**, l'alimentation électrique du bouton-poussoir (6) s'effectue au moyen d'un couplage de tension inductif avec la serrure de contact rotative (4).

9. Bouton-poussoir selon la revendication 2 ou 3, **caractérisé en ce que**, un élément d'actionnement présente une unité de communication sans fil, qui envoie lors de l'actionnement du bouton-poussoir un signal à la serrure de contact rotative (4), les fonctions de la serrure de contact étant activées.
